# FASCICULE DE BREVET EUROPEEN

(11) **EP 0 562 918 B1**
(45) Date de publication et mention de la délivrance du brevet: **27.11.1996**
(21) Numéro de dépôt: 93400692.5
(22) Date de dépôt: 18.03.1993
(51) Int. Cl.: E06B 1/34, E04F 19/02, F16B 2/24, B66B 13/30

(54) **Elément d'habillage d'une paroi et son utilisation pour porte d'ascenseur**
Wandverkleidungselement und seine Verwendung für Aufzugtüren
Wall cladding element and its use for elevator doors

(30) Priorité: 27.03.1992 FR 9203742
(43) Date de publication de la demande: 29.09.1993
(73) Titulaire: KONE Elevator GmbH, CH-6340 Baar (CH)
(72) Inventeur: Guegan, Claude, F-06000 Nice (FR); Pregliasco, André, F-06000 Nice (FR)
(74) Mandataire: Orès, Bernard

(56) Documents cités:
- BE-A- 667 549
- DE-A- 3 117 046
- US-A- 1 327 441
- US-A- 1 541 055
- US-A- 1 950 822
- US-A- 2 787 911
- US-A- 3 373 463
- US-A- 4 064 667

## Description

La présente invention concerne un élément d'habillage d'une paroi rigide telle qu'un mur, une cloison ou un montant de porte ou de fenêtre (US-A-1541055).

Le but de l'invention est de fournir un moyen d'amélioration du cadre de vie quotidienne en changeant l'aspect extérieur d'une paroi à l'aide d'éléments d'habillage d'une conception particulière.

L'invention a également pour objet un élément d'habillage de protection d'une paroi rigide.

L'élément d'habillage selon l'invention permet de couvrir au moins partiellement un côté extérieur d'une paroi rigide Cet élément comprend un profilé rigide creux pourvu d'au moins un logement longitudinal dans le creux avec une ouverture longitudinale rétrécie, au moins deux clips élastiques dont les branches coopèrent de façon coulissante longitudinalement avec la surface intérieure du logement et dont les têtes font saillie à l'extérieur de l'ouverture rétrécie du logement, chaque tête de clip ayant une longueur supérieure à l'épaisseur de la paroi rigide et pouvant traverser un trou pratiqué dans la paroi rigide, et au moins deux coins de fixation coopérant de façon amovible, du côté intérieur de la paroi rigide, avec les têtes de clip ayant traversé la paroi rigide.

Le profilé rigide présente une section constante est réalisé en un matériau métallique ou en une matière plastique rigide. Les clips peuvent être réalisés par pliage d'un fil métallique avec la tête du clip faisant une boucle dans un plan transversal aux branches de clips qui s'étendent longitudinalement à l'intérieur du logement La fixation de l'élément d'habillage sur le côté extérieur de la paroi rigide est obtenue dans ce cas par l'introduction à force des coins dans les boucles de têtes de clips dépassant le côté intérieur de la paroi rigide après avoir traversé les trous correspondants, l'élargissement de la boucle par l'introduction du coin ou/et le coin lui-même empêchant le mouvement d'extraction des têtes de clips vers le côté extérieur de la paroi rigide.

Selon un mode particulier de réalisation de l'invention, le profilé comprend deux logements longitudinaux parallèles dans le creux, dans chaque logement se trouvant deux clips élastiques Un clip dans un logement est associé par paire à un clip du second logement de façon à traverser deux trous correspondants de la paroi rigide situés dans un plan transversal au profilé De préférence dans ce cas, on réalise un coin de fixation en forme de U inversé pour chaque paire de clips, les branches de U inversé coopérant avec les deux têtes de clips faisant saillie du côté intérieur de la paroi rigide.

Une application particulièrement intéressante de la présente invention est d'équiper les montants de façade d'une porte d'ascenseur à l'aide des éléments d'habillage de l'invention afin de changer l'aspect austère des portes d'ascenseur classiques En effet, les soucis principaux des constructeurs d'ascenseurs sont jusqu'à présent conditionnés par des contraintes et normes de construction du bâtiment L'aspect extérieur des portes d'ascenseur est laissé en second plan, ce qui peut détériorer l'harmonie esthétique et des styles du cadre dans lequel les portes d'ascenseur sont intégrées L'utilisation des éléments d'habillage particuliers selon l'invention permet de pallier ces inconvénients en rendant le cadre de vie plus harmonieux.

L'invention sera mieux comprise à l'étude de la description détaillée d'un mode de réalisation particulier pris à titre nullement limitatif et illustré par des dessins annexés, sur lesquels :
la figure 1 est une vue partielle en perspective du profilé de l'élément d'habillage avec les clips élastiques,
la figure 2 est une vue schématique de l'élément d'habillage fixé sur une paroi ,
la figure 3 est une vue de détail en coupe longitudinale pour montrer le mécanisme de fixation de l'élément d'habillage,
la figure 4 est une vue partielle en coupe transversale montrant le même système de fixation,
la figure 5 est une vue extérieure d'une porte d'ascenseur classique,
la figure 6 est une vue extérieure de la porte d'ascenseur de la figure 5 équipée des éléments d'habillage sur les montants de façade.
la figure 7 est une vue schématique en coupe transversale de la porte d'ascenseur de la figure 6 en position fermée, et
la figure 8 est une vue schématique en coupe transversale de la porte d'ascenseur de la figure 6 en position ouverte.

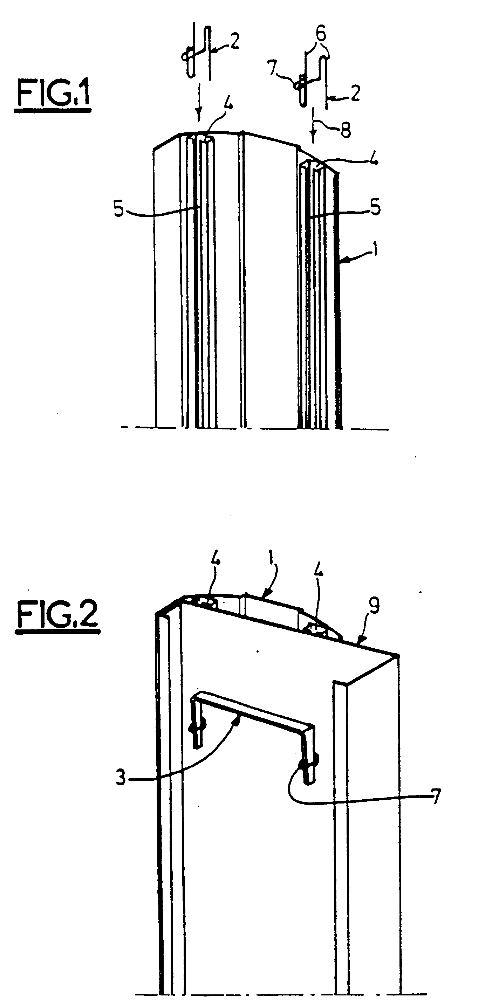

Comme illustré sur les figures 1 et 2, l'élément d'habillage comprend un profilé rigide 1 à section constante, des clips élastiques 2 et des coins de fixation 3. Le profilé 1 présente un profil creux et des logements longitudinaux 4 situés dans le creux avec chacun une ouverture longitudinale rétrécie 5. Les logements 4 sont parallèles l'un à l'autre et chacun reçoit au moins deux clips élastiques 2. Chaque clip 2 est réalisé par pliage d'un fil métallique qui forme deux branches 6 s'étendant longitudinalement qui sont réunies par une boucle 7 s'étendant transversalement et formant tête de clip.

Les clips 2 sont introduits longitudinalement à l'intérieur d'un logement 4, comme indiqué par la flèche 8, avec les branches 6 coulissant longitudinalement par rapport à la surface intérieure du logement 4 et avec la tête 7 faisant saillie à l'extérieur de l'ouverture rétrécie 5 du logement 4. Les branches 6 des clips 2 peuvent coulisser à l'intérieur des logements 4 afin de pouvoir ajuster le positionnement de la tête 7 de clip qui fait saillie à l'extérieur de l'ouverture 5 de logement.

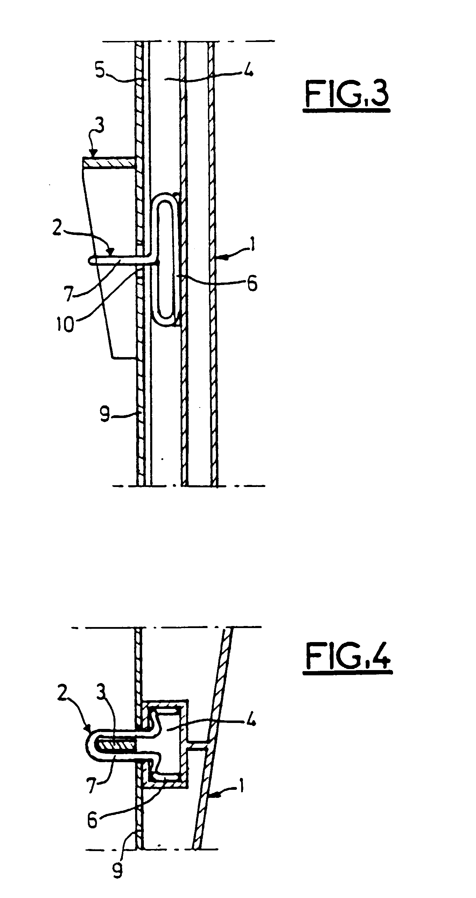

Comme montré sur les figures 2, 3 et 4, on peut associer par paire les clips 2 se trouvant dans les deux logements longitudinaux 4 en les plaçant dans un même plan transversal, cela en vue de monter le profilé 1 sur le côté extérieur d'une paroi rigide 9. La paroi 9 présente des trous 10 par paire situés sur un plan transversal et ayant un écartement transversal identique à celui des ouvertures longitudinales 5 des logements 4 correspondants. Lors du montage, on fait coulisser longitudinalement les clips 2 dans les logements 4 au moyen des têtes 7 en saillie de clip pour les ramener en regard des trous 10 pratiqués dans la paroi rigide 9. On introduit ensuite les têtes 7 de clip au travers des trous 10 jusqu'à ce que les ouvertures 5 soient en appui contre le côté extérieur de la paroi 9. Les têtes 7 de clip ont une longueur supérieure à l'épaisseur de la paroi 9 de façon à ce que après avoir traversé la paroi 9 elles présentent une boucle dans le plan transversal du côté intérieur de la paroi 9.

Le coin 3 réalisé sous forme d'un U inversé est ensuite utilisé pour fixer les têtes 7 des clips 2. Pour ce faire, on introduit les branches du U inversé 3 dans chacune des boucles de la paire de têtes 7 de clip qui font saillie du côté intérieur de la paroi 9.

Pour le démontage du profilé 1, il suffit d'enlever le coin 3 de fixation et de retirer le profilé 1 transversalement de la paroi 9 en dégageant les têtes 7 de clip des trous 10 de la paroi 9. On peut ainsi changer l'aspect de l'habillage de la paroi 9 en changeant la forme, la matière ou la couleur du profilé 1.

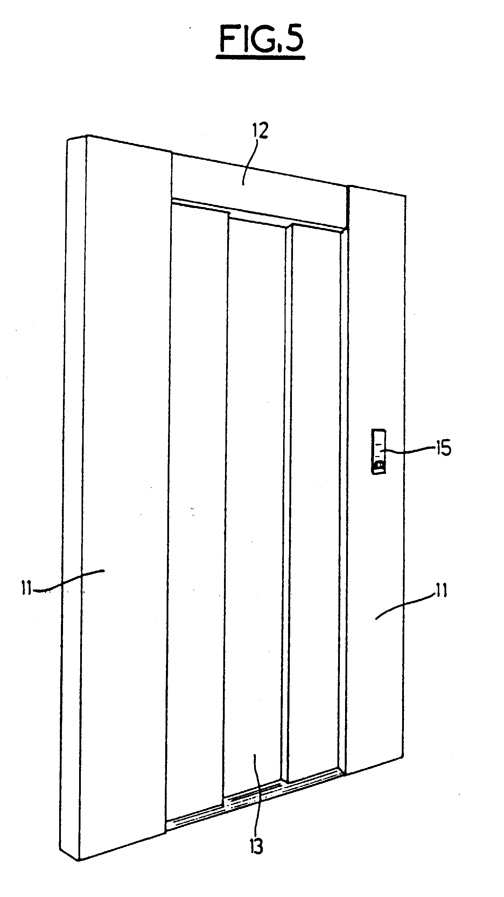

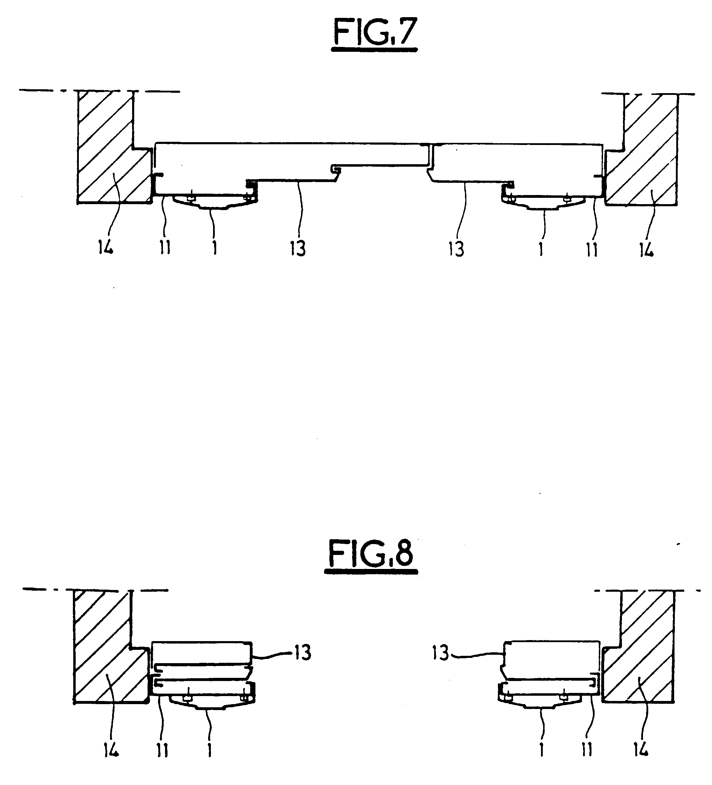

Sur les figures 5, 6, 7 et 8 est illustrée une application particulière de l'élément d'habillage pour une porte d'ascenseur.

La figure 5 montre une porte d'ascenseur automatique classique qui comprend deux montants de façade 11 verticaux et plans, reliés entre eux par un montant horizontal de façade 12, les montants 11, 12 formant un cadre extérieur pour la porte automatique proprement dite 13. La porte est encastrée dans un mur 14. Sur un des montants verticaux 11 est installé un bouton de commande 15 de l'ascenseur.

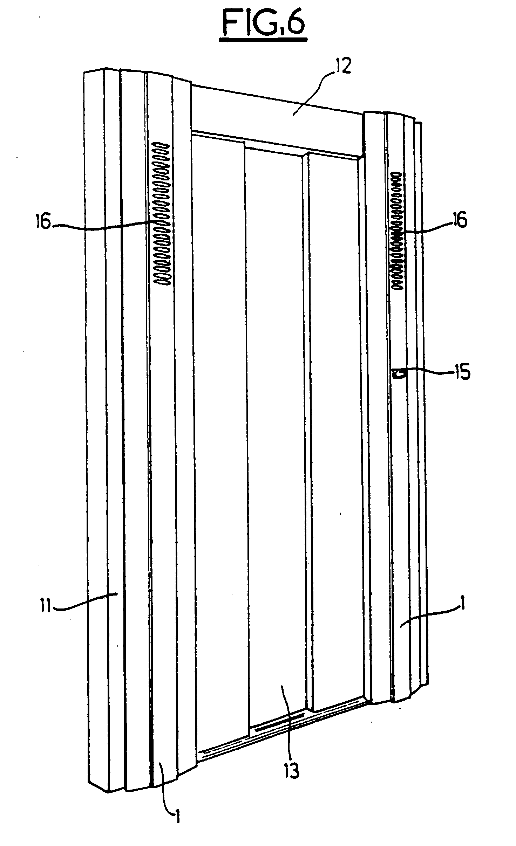

Sur la figure 6 est montée une porte d'ascenseur automatique du type classique de la figure 5 équipée d'un élément d'habillement sur chacun des montants verticaux de façade 11. Le profilé 1 de l'élément d'habillement est monté sur le montant vertical de façade 11 avec les moyens de fixation 2, 3 traversant la paroi du montant de façade 11 (voir figures 2, 3 et 4). Le bouton de commande 15 est encastré dans une ouverture pratiquée dans un des profilés 1 d'éléments d'habillement. Chaque profilé 1 peut comporter des jours 16 permettant l'éclairage de la porte grâce à des lampes d'éclairage disposées dans l'espace formé entre le creux du profilé 1 et le côté extérieur du montant vertical de façade 11.

Grâce à l'invention, on peut adapter l'aspect des portes d'ascenseur pour mieux les intégrer dans le cadre de vie environnant.

## Revendications

1. Elément d'habillage du côté extérieur d'une paroi rigide (9), caractérisé par le fait qu'il comprend un profilé rigide creux (2) pourvu d'au moins un logement longitudinal (4) dans le creux avec une ouverture longitudinale rétrécie (5), au moins deux clips élastiques (2) dont les branches (6) coopèrent de façon coulissante longitudinalement avec la surface interne du logement et dont les têtes (7) font saillie à l'extérieur de l'ouverture rétrécie du logement, chaque tête de clip ayant une longueur supérieure à l'épaisseur de la paroi rigide et pouvant traverser un trou (10) pratiqué dans la paroi rigide, et au moins deux coins de fixation (3) coopérant de façon amovible, du côté intérieur de la paroi rigide, avec les têtes de clip ayant traversé la paroi rigide.

2. Elément d'habillage selon la revendication 1, caractérisé par le fait que chaque clip (2) est obtenu par pliage d'un fil métallique avec les branches (6) s'étendant longitudinalement et la tête (7) formant une boucle dans le plan transversal, et que le coin (3) est introduit dans la boucle de la tête de clip dépassant le côté intérieur de la paroi rigide (9) empêchant ainsi le mouvement d'extraction de la tête (7) de clip du trou (10) de la paroi.

3. Elément d'habillage selon la revendication 2, caractérisé par le fait que le profilé comprend deux logements longitudinaux (4) parallèles dans le creux, que chaque clip se trouvant dans un logement est associé par paire à un clip se trouvant dans l'autre logement dans un plan transversal au profilé pour coopérer avec deux trous (10) correspondants de la paroi rigide (9), et que à chaque paire de clips (2) est associé un coin de fixation (3) en forme de U inversé dont les branches coopèrent avec les têtes (7) respectives des clips.

4. Elément d'habillage selon l'une des revendications précédentes, caractérisé par le fait que le profilé (1) est réalisé en matériau métallique ou en matière plastique rigide.

5. Elément d'habillage selon l'une des revendications précédentes, caractérisé par le fait que le profilé (1) est partiellement ajouré.

6. Utilisation d'au moins un élément d'habillage selon l'une des revendications précédentes pour une porte d'ascenseur.

## Patentansprüche

1. Element zur Verkleidung der Außenseite einer starren Wand (9), dadurch gekennzeichnet, daß es ein starres Hohlprofil (1) aufweist, das in der Höhlung mit mindestens einem Längssitz (4) mit einer verengten Längsöffnung (5) versehen ist, mindestens zwei elastische Clips (2), deren Schenkel (6) längsverschieblich mit der Innenoberfläche des Sitzes zusammenwirken und deren Köpfe (7) aus der verengten Öffnung des Sitzes heraus überstehen, wobei jeder Clipkopf eine Länge aufweist, die größer ist als die Dicke der starren Wand, und eine Bohrung (10) durchsetzen kann, die in die starre Wand eingebracht ist, sowie mindestens zwei Keile (3), die abnehmbar auf der Innenseite der starren Wand mit den Clipköpfen zusammenwirken, die die starre Wand durchsetzt haben.

2. Verkleidungselement nach Anspruch 1, dadurch gekennzeichnet, daß jeder Clip (2) durch Umbiegen eines Metalldrahts erhalten ist, wobei sich seine Schenkel (6) in Längsrichtung erstrecken und der Kopf (7) eine Öse in der Querebene bildet, und daß der Keil (3) in die Öse des Clipkopfes eingeführt ist, der über die Innenseite der starren Wand (9) übersteht, und so die Ausziehbewegung des Clipkopfes (7) aus der Bohrung (10) der Wand verhindert.

3. Verkleidungselement nach Anspruch 2, dadurch gekennzeichnet, daß das Profil in der Höhlung zwei parallele Längssitze (4) aufweist, daß jeder Clip, der sich im einen Sitz befindet, paarweise einem Clip zugeordnet ist, der sich in einer Ebene quer zum Profil im anderen Sitz befindet, um mit zwei entsprechenden Bohrungen (10) der starren Wand (9) zusammenzuwirken, und daß jedem Clippaar (2) ein Befestigungskeil (3) in Form eines umgekehrten U zugewandt ist, dessen Arme mit den jeweiligen Clipköpfen (7) zusammenwirken.

4. Verkleidungselement nach einem der vorangehenden Ansprüche, dadurch gekennzeichnet, daß das Profil (1) aus Metall oder aus starrem Kunststoff ausgeführt ist.

5. Verkleidungselement nach einem der vorangehenden Ansprüche, dadurch gekennzeichnet, daß das Profil (1) teilweise durchbrochen ist.

6. Verwendung mindestens eines Verkleidungselements nach einem der vorangehenden Ansprüche für eine Lifttür.

## Claims

1. Cladding element for the outside of a rigid wall (9), characterised in that it comprises a hollow rigid profiled part (1) provided with at least one longitudinal housing (4) in the hollow, having a narrow longitudinal opening (5), at least two elastic clips (2) of which the branches (6) cooperate in a longitudinally sliding manner with the inner surface of the housing and of which the heads (7) protrude to the outside of the narrow opening of the housing, each clip head being of a length greater than the thickness of the rigid wall and capable of passing through a hole (10) formed in the rigid wall, and at least two fixing wedges (3) cooperating in a removable manner, on the inside of the rigid wall, with the clip heads having passed through the rigid wall.

2. Cladding element according to claim 1, characterised in that each clip (2) is obtained by folding a metal wire, with the branches (6) extending longitudinally and the head (7) forming a loop in the transverse plane, and that the wedge (3) is introduced into the clip head loop extending beyond the inside of the rigid wall (9) thus preventing a movement to extract the head (7) of the clip from the hole (10) in the wall.

3. Cladding element according to claim 2, characterised in that the profiled part comprises two parallel longitudinal housings (4) in the hollow, that each clip being located in a housing is associated as a pair with a clip being located in the other housing in a plane transverse to the profiled part in order to cooperate with two corresponding holes (10) in the rigid wall (9), and that with each pair of clips (2) is associated a fixing wedge (3) in the form of an inverted U of which the branches cooperate with the respective clip heads (7).

4. Cladding element according to any of the preceding claims, characterised in that the profiled part (1) is produced of a metal material or a rigid synthetic material.

5. Cladding element according to any of the preceding claims, characterised in that the profiled part (1) is partially open-worked.

6. Use of at least one cladding element according to any of the preceding claims for the door of an elevator.
